# EUROPÄISCHE PATENTANMELDUNG

(11) **EP 3 654 052 A1**
(43) Veröffentlichungstag der Anmeldung: **20.05.2020**
(21) Anmeldenummer: 19207623.0
(22) Anmeldetag: 07.11.2019
(51) Int. Cl.: G01S 3/808, G01S 5/28, G01S 5/30, G01S 11/14

(54) **KALIBRIERSYSTEM UND KALIBRIERVERFAHREN FÜR EINE ERFASSUNGSEINRICHTUNG EINES FAHRZEUGS**

(30) Priorität: 19.11.2018 DE 102018219796
(71) Anmelder: Robert Bosch GmbH, 70442 Stuttgart (DE)
(72) Erfinder: Pegios, Konstantin, 73230 Kirchheim/Teck (DE); Spee, Sascha, 73111 Lauterstein (DE); Disaro, Mauro, 70372 Stuttgart (DE)

(57) **Zusammenfassung**

Die Erfindung betrifft Kalibriersystem (10) für eine Erfassungseinrichtung (20) eines Fahrzeugs (30), umfassend mindestens eine Schallquelle (40) zum Aussenden von mindestens einem akustischen Signal (41) mit einer festgelegten Wellenlänge, die an mindestens einer Sendepositionen dem Fahrzeug (30) angeordnet ist, eine Empfangseinrichtung (20), umfassend mindestens ein erstes Mikrofon (M1), ein zweites Mikrofon (M2) und ein drittes Mikrofon (M3) zum Empfangen des akustischen Signals (41), und eine Steuervorrichtung (50), die ausgebildet ist basierend auf dem von der Empfangseinrichtung (20) empfangenen akustischen Signal (41) die Sendeposition der Schallquelle (40) zu berechnen, wobei die Steuervorrichtung (50) mit der Schallquelle (40) und der Empfangseinrichtung (20) verbunden ist.

## Beschreibung

Die vorliegende Erfindung betrifft ein Kalibiersystem für eine Erfassungseinrichtung eines Fahrzeugs. Ferner betrifft die Erfindung ein Verfahren zum Kalibrieren einer Erfassungseinrichtung eines Fahrzeugs. Weiter betrifft die Erfindung ein Programmelement und ein computerlesbares Medium.

### Stand der Technik

Eine Erfassungseinrichtung eines Fahrzeugs, wie etwa eine Kamera, ein Radarsystem, ein LIDAR-System oder ähnliches, für beispielsweise ein Fahrerassistenzsystem (in Englisch: (A)DAS - (Advanced) Driver Assistance System) wird üblicherweise kalibriert, um eine korrekte Funktion im Fahrbetrieb zu erreichen. Dies kann beim Fahrzeughersteller für die Auslieferung des Fahrzeugs, aber auch während des Fahrzeuglebenszyklus in Werkstätten, z.B. im Rahmen einer Reparatur, erfolgen.

Üblicherweise werden vor der Kalibrierung die Kalibrierungsmittel für die Erfassungseinrichtung, wie etwa eine Kalibriertafel, relativ zu dem Fahrzeug ausgerichtet. Als fahrzeugseitige Bezugsgröße kann dabei beispielsweise die Fahrachse, die sogenannte thrust line, oder die Fahrzeugmittelachse (in Englisch: vehicle center line) herangezogen werden. Hierzu wird über verschiedene, in der Regel laserbasierte, Messgeräte die Fahrhöhe des Fahrzeugs, die Fahrachse des Fahrzeugs, der Neigungswinkel des Fahrzeugs und der Rollwinkel des Fahrzeugs gemessen. Üblicherweise werden hierzu die Kalibrierungsmittel an den Rädern, insbesondere den Felgen des Fahrzeugs angebracht. Das befestigen von externen Bauteilen an den Rädern und/oder den Felgen, erhöht das Risiko für Schäden an den Rädern und/oder den Felgen.

**Aufgabe** der Erfindung ist es deshalb eine verbesserte Möglichkeit zur Kalibrierung der Erfassungseinrichtung des Fahrzeugs bereitzustellen.

Die Aufgabe wird durch die Vorrichtung gemäß Anspruch 1, das Verfahren gemäß Anspruch 7, dem Programmelement gemäß Anspruch 9 sowie dem computerlesbaren Medium gemäß Anspruch 10 **gelöst.** Vorteilhafte Ausgestaltungen der Erfindung sind Gegenstand der abhängigen Ansprüche, der Beschreibung sowie den begleitenden Figuren.

Offenbarung der Erfindung:
Ein vorgeschlagenes Kalibriersystem für eine Erfassungseinrichtung eines Fahrzeugs eignet sich insbesondere zur Kalibrierung eines Fahrerassistenzsystems, bei dem die Erfassungseinrichtung eine Kamera, ein Radarsystem, ein Ultraschallsensorsystem, ein LIDAR-System oder ähnliches umfassen kann.

Das Kalibriersystem umfasst mindestens eine Schallquelle zum Aussenden von mindestens einem akustischen Signal mit einer festgelegten Wellenlänge, die an mindestens einer Sendeposition an dem Fahrzeug angeordnet ist, eine Empfangseinrichtung, umfassend mindestens ein erstes Mikrofon, ein zweites Mikrofon und eine drittes Mikrofon zum Empfangen des akustischen Signals und eine Steuervorrichtung, die ausgebildet ist basierend auf dem von der Empfangseinrichtung empfangenen akustischen Signal die Sendeposition der Schallquelle zu berechnen, wobei die Steuervorrichtung mit der Schallquelle und der Empfangseinrichtung verbunden ist.

Durch die Ausgestaltung des Kalibiersystems basierend auf akustischen Signalen, kann auf den Einsatz von Lasern verzichtet werden. Auf diese Weise sind keine persönlichen Schutzmaßnahmen (beispielsweise eine Laserschutzbrille), technischen Schutzmaßnahmen (beispielsweise eine Abschirmung des Laserbereichs) und organisatorischen Schutzmaßnahmen (beispielsweise eine besondere Unterweisung der Mitarbeiter) mehr nötig, um die an dem Fahrzeug arbeitenden Personen davor zu schützen, ungewünscht einer schädlichen Dosis an Laserstrahlung ausgesetzt zu sein. Außerdem ist das Kalibrierergebnis unabhängig von äußeren Bedingungen, die negative Auswirkungen auf einen Laser haben, wie insbesondere Spiegelungen, oder erschwerte Einstellbarkeit der Ausrichtung des Lasers.

Die Steuervorrichtung kann als elektronische Steuervorrichtung ausgebildet sein. Die Empfangseinrichtung ist vorzugsweise vor dem Fahrzeug angeordnet. Die Empfangseinrichtung und die Schallquelle sind über Kabel oder kabellos mit der Steuervorrichtung verbunden.

In einer bevorzugten Ausgestaltung umfasst das Kalibiersystem lediglich eine Schallquelle. Im Vergleich dazu benötigen übliche Systeme mehrere Komponenten, beispielsweise Radklammern, zum Befestigen der Signalquelle an einem Rad, und Maßbänder. Auf diese Weise können Produktions- und Anwendungskosten für das Kalibriersystem gesenkt werden. Somit ist die Schallquelle an einer Sendeposition angeordnet und sendet ein akustisches Signal, welches von der Empfangseinrichtung empfangen wird. Danach wird die Schallquelle an einer weiteren Sendeposition angeordnet und sendet ein weiteres akustisches Signal, welches von der Empfangseinrichtung empfangen wird.

Das Kalibriersystem kann auch mehrere Schallquellen aufweisen. Somit sind die Schallquellen in jeweils unterschiedlichen Sendepositionen angeordnet und senden jeweils simultan ein akustisches Signal, welches von der Empfangseinrichtung empfangen wird. Damit die Empfangseinrichtung die unterschiedlichen akustischen Signale voneinander unterscheiden kann, sendet jede Schallquelle ein akustisches Signal mit einer festgelegten Wellenlänge, wobei sich die Wellenlängen der einzelnen akustischen Signale voneinander unterscheiden.

In einer bevorzugten Ausführungsform befinden sich die Wellenlängen aller akustischen Signale im hörbaren Bereich.

Vorteilhaft ist die Schallquelle an den Kotflügeln von Rädern des Fahrzeugs und/oder an der Radnabe von Rädern des Fahrzeugs angeordnet.

In einer bevorzugten Ausführungsform ist die Schallquelle an jedem Kotflügel an einer vergleichbaren Stelle angebracht, insbesondere über der Radnabe, des von dem Kotflügel überspannten Rades des Fahrzeugs. Auf diese Weise wird die Genauigkeit der Kalibrierung verbessert.

In einer vorteilhaften Ausgestaltung liegen die Sendepositionen, an denen die Schallquellen angeordnet werden, an den jeweiligen Kotflügeln aller vier Räder des Fahrzeugs und an den Radnaben von je zwei sich durch eine Fahrachse, vorteilhaft die hintere Fahrachse, verbindenden Rädern.

Auf diese Weise ist der Einsatz von ein bis sechs Schallquellen denkbar. Bei dem Einsatz von lediglich einer Schallquelle, muss diese folglich fünfmal umpositioniert werden, während bei dem Einsatz von sechs Schallquellen eine Umpositionierung nicht nötig ist.

Die Schallquellen müssen nicht zwangsweise an den Sendepositionen befestigen werden, sondern können von einem Anwender an der entsprechenden Position gehalten werden. Dies ist besonders vorteilhaft für die Sendepositionen an den Radnaben, da sich dort eine Befestigung als besonders schwierig darstellt.

In einer vorteilhaften Ausgestaltung werden die Schallquellen an den Sendepositionen, insbesondere an den Sendepositionen an den Kotflügeln, durch eine einfach lösbare Befestigung, wie beispielsweise durch Klebepads oder Saugnäpfe, befestigt. Die Schallquellen können jedoch auch manuell an die jeweilige Sendeposition gehalten werden.

Auf diese Weise ist es nicht mehr nötig die Signalquelle des Kalibriersystems direkt am Rad zu befestigen. So können mögliche Schäden an den Reifen oder den Felgen des Fahrzeugs verhindert werden.

Vorteilhaft sind das erste Mikrofon, das zweite Mikrofon und das dritte Mikrofon vertikal zueinander angeordnet sind.

Auf diese Weise kann die Höhe der Schallquelle und somit die Fahrachse des Fahrzeugs berechnet werden. Hierzu werden lediglich die Laufzeitdifferenzen der einzelnen akustischen Signale, welche von den Mikrofonen erfasst werden, verwendet. Deshalb kann grundsätzlich jede Art von Schallquelle verwendet werden. Somit wird zuerst die Fahrhöhe basierend auf der Position der Sendepositionen an den Radnaben berechnet. Anschließend wird die Höhe der Sendepositionen an den Kotflügeln berechnet. Hieraus ergibt berechnet die Steuervorrichtung den Neigungswinkel und den Rollwinkel des Fahrzeugs.

Vorteilhaft ist die Steuervorrichtung eingerichtet, basierend auf mindestens zwei Sendepositionen der Schallquelle am Fahrzeug eine Fahrhöhe des Fahrzeugs und/oder eine Fahrachse des Fahrzeugs und/oder einen Neigungswinkel des Fahrzeugs und/oder einen Rollwinkel des Fahrzeugs zu berechnen.

Die Fahrhöhe des Fahrzeugs definiert sich durch die Höhe der Radnabe über dem Boden.

Die Fahrachse des Fahrzeugs gibt an, in welchem Winkel die Fahrachse im Vergleich zur Normalstellung, 90 Grad zur Fahrtrichtung, verschwenkt ist.

Der Neigungswinkel gibt an, in welchem Winkel das Fahrzeug längs zur Normalstellung geneigt ist, in anderen Worten in Fahrtrichtung nach vorne oder nach hinten geneigt ist.

Der Rollwinkel gibt an, in welchem Winkel das Fahrzeug quer zur Normalstellung geneigt ist, in anderen Worten in Fahrtrichtung nach links oder nach rechts geneigt ist.

Vorteilhaft weist die Empfangseinrichtung ein viertes Mikrofon, und ein fünftes Mikrofon, auf, die derart angeordnet sind, dass mindestens drei Mikrofone horizontal zueinander angeordnet sind.

Vorteilhaft ist die Steuervorrichtung eingerichtet, wenn das Fahrzeug während einer Messung bewegt wird, eine Fahrachse des Fahrzeugs basierend auf einer Sendeposition der Schallquelle am Fahrzeug zu berechnen.

Mit Hilfe dieser Anordnung kann, wenn sich das Fahrzeug bei der Messung bewegt, die Fahrachse, berechnet werden, ohne dass die Sendepositionen an den Radnaben von Nöten sind. Hierfür reicht eine Sendeposition der Schallquelle am Fahrzeug aus. Die Steuervorrichtung ist vorzugsweise eingerichtet, die Fahrachse basierend auf der sich durch das Bewegen des Fahrzeugs ändernden Sendeposition der Schallquelle am Fahrzeug während der Messung zu berechnen.

In einer vorteilhaften Ausgestaltung bewegt sich das Fahrzeug in einer vergleichsweise geringen Geschwindigkeit, insbesondere einer Geschwindigkeit niedriger als die Schrittgeschwindigkeit. Vorteilhafterweise legt das Fahrzeug während der Messung eine Strecke von 1 bis 3 Metern zurück. Für die Kalibrierung ist insbesondere der zurückgelegte Fahrweg bedeutsam.

Die vertikal und horizontal zueinander angeordneten Mikrofone können grundsätzlich beliebig zueinander angeordnet werden, solange jeweils mindestens drei Mikrofone vertikal zueinander und drei Mikrofone horizontal zueinander angeordnet sind. Vorzugsweise sind die Mikrofone derart angeordnet, dass sie eine Kreuzform bilden, in dessen Zentrum ebenfalls ein Mikrofon angeordnet ist und die außerhalb des Zentrums angeordneten Mikrofonen den gleichen Abstand zu dem im Zentrum angeordneten Mikrofon aufweisen.

Es wird auch ein Verfahren zum Kalibrieren einer Erfassungseinrichtung eines Fahrzeugs vorgeschlagen, das insbesondere mittels des vorstehend beschriebenen Kalibriersystems durchgeführt werden kann. Das Verfahren umfasst folgende Schritte:
Anordnen von mindestens einer Schallquelle an mindestens einer Sendeposition an dem Fahrzeug;
Aussenden eines akustischen Signals mit einer festgelegten Wellenlänge durch die Schallquelle;
Empfangen des akustischen Signals durch eine Empfangseinrichtung umfassend mindestens ein erstes Mikrofon, ein zweites Mikrofon und ein drittes Mikrofon; und
Berechnen der Sendeposition, der Schallquelle, basierend auf dem von der Empfangseinrichtung empfangenen akustischen Signal, durch eine Steuervorrichtung.

Vorteilhaft ist die Schallquelle an den Kotflügeln von Rädern des Fahrzeugs und/oder an der Radnabe von Rädern des Fahrzeugs angeordnet.

Vorteilhaft wird eine Fahrhöhe des Fahrzeugs und/oder eine Fahrachse des Fahrzeugs und/oder ein Neigungswinkel des Fahrzeugs und/oder ein Rollwinkel des Fahrzeugs basierend auf mindestens zwei Sendepositionen der Schallquelle am Fahrzeug durch die Steuervorrichtung berechnet, oder vorteilhaft wird das akustische Signal durch eine Empfangseinrichtung umfassend mindestens ein erstes Mikrofon, ein zweites Mikrofon, ein drittes Mikrofon, ein viertes Mikrofon und ein fünftes Mikrofon empfangen, wobei mindestens drei Mikrofone horizontal zueinander angeordnet sind, und wenn das Fahrzeug während der Messung bewegt wird, wird eine Fahrachse des Fahrzeugs basierend auf einer Sendeposition der Schallquelle am Fahrzeug durch die Steuervorrichtung berechnet.

Programmelement, das, wenn es auf einer Steuervorrichtung eines Kalibrierungssystems ausgeführt wird, das Kalibrierungssystem anleitet, die folgenden Schritte durchzuführen:
Aussenden eines akustischen Signals mit einer festgelegten Wellenlänge durch die Schallquelle;
Empfangen des akustischen Signals durch eine Empfangseinrichtung umfassend mindestens ein erstes Mikrofon, ein zweites Mikrofon und ein drittes Mikrofon; und
Berechnen der Sendeposition, der Schallquelle, basierend auf dem von der Empfangseinrichtung empfangenen akustischen Signal, durch eine Steuervorrichtung.

Computerlesbares medium, auf dem ein Programmelement zuvor beschriebener Art gespeichert ist.

### Kurze Beschreibung der Figuren

Im Folgenden werden vorteilhafte Ausführungsbeispiele der Erfindung mit Bezug auf die begleitenden Figuren detailliert beschrieben. Es zeigen:
- Figur 1: ein schematisch dargestelltes Kalibriersystem für eine Erfassungseinrichtung eines Fahrzeugs;
- Figur 2: eine erste Anordnung von Mikrofonen der Empfangseinrichtung und eine schematische Darstellung eines akustischen Signals einer Schallquelle;
- Figur 3: eine zweite Anordnung von Mikrofonen der Empfangseinrichtung; und
- Figur 4: ein Flussdiagramm eines Verfahrens zum Kalibrieren einer Erfassungseinrichtung eines Fahrzeugs.

Die Figuren sind lediglich schematisch und nicht maßstabsgetreu.

### Ausführungsformen der Erfindung

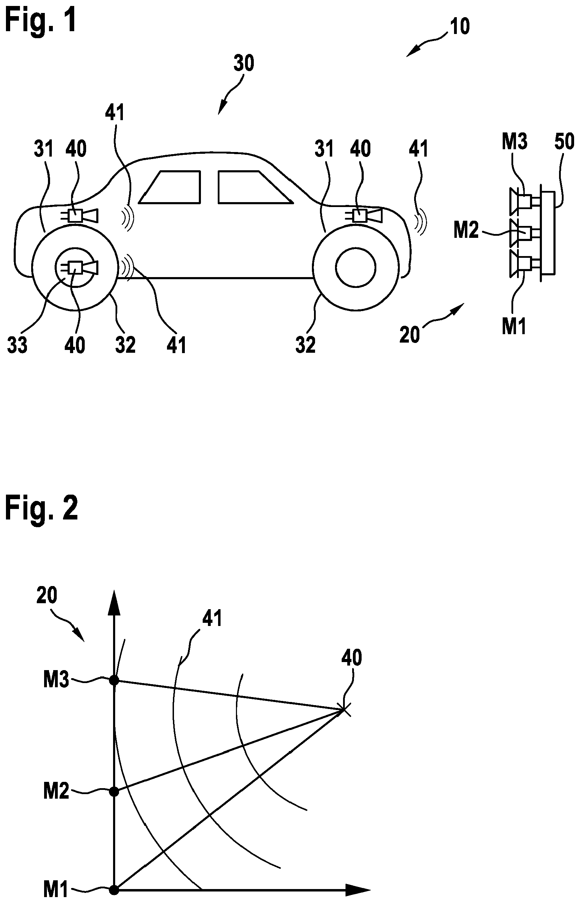

Figur 1 zeigt ein Kalibriersystem 10, das sich zum Kalibrieren einer in einem Fahrzeug 30 angeordneten Erfassungseinrichtung 20 von z.B. einem Fahrerassistenzsystem eignet. Die Erfassungseinrichtung 20 ist beispielsweise als Kamerasystem, Radarsystem, LIDAR-System oder ähnliches ausgebildet.

Das Kalibriersystem 10 ist computergestützt implementiert. Das Kalibriersystem umfasst weiter Schallquellen 40, die an den Radnaben 33 der Räder 31 des Fahrzeugs 30 und den Kotflügeln 31 des Fahrzeugs 30 angeordnet sind. Die Schallquellen 40 sind derart an den Kotflügeln 31 angeordnet, dass die Schallquellen 40 jeweils vertikal zu der Radnabe 33 eines Rades 31 angeordnet sind. Die Empfangseinrichtung 20 umfasst beispielsweise sechs Schallquellen 40, wobei zwei Schallquellen 40 jeweils an den Radnaben 33 der Hinterreifen angeordnet sind und vier Schallquellen 40 jeweils an den Kotflügeln 31 aller Reifen angeordnet sind. Auf diese Weise kann die Kalibrierung in einem Messschritt vollzogen werden. Sollte nur eine Schallquelle 40 zur Verfügung stehen, kann die Messung auch sechs Mal durchgeführt werden, wobei die Schallquelle 40 bei jeder Messung an einer anderen Sendeposition angeordnet ist.

Die Schallquellen 40 können dabei lösbar an dem Fahrzeug 30 befestigt sein oder manuell an der jeweiligen Position gehalten werden. Es hat sich gezeigt, dass es besonders einfach ist, die Schallquellen 40 an den Radnaben 33 lediglich an die richtige Position zu halten und die Schallquellen 40 an den Kotflügeln 31 lösbar zu befestigen. Vorzugsweise werden die Schallquellen 40 an den Kotflügeln 31 über ein Klebepad verbunden, welches keine Rückstände hinterlässt.

Ferner umfasst das Kalibriersystem 10 eine Empfangseinrichtung 20, die zum Empfangen eines oder mehrerer akustischer Signale 41 der Schallquellen 40 ausgebildet ist. Die Empfangseinrichtung 20 ist vor dem Fahrzeug 30, davon beabstandet, angeordnet. Das Kalibriersystem 10 verfügt ferner über eine Steuervorrichtung 50, die über ein Funkmodul verfügt und somit kabellos mit den Schallquellen 40 und der Empfangseinrichtung 20 verbunden ist. Die Steuervorrichtung 50 weist hier einen Prozessor, einen Speicher, eine Benutzerschnittstelle usw. auf, und ist vorzugsweise beabstandet zu dem Fahrzeug 30 angeordnet.

Figur 2 zeigt eine erste Ausgestaltung der Empfangseinrichtung 20, umfassend eine erstes Mikrofon M1, ein zweites Mikrofon M2 und ein drittes Mikrofon M3. Das erste Mikrofon M1, das zweite Mikrofon M2 und das dritte Mikrofon M3 sind vertikal zueinander angeordnet und in Richtung des Fahrzeugs 30 ausgerichtet. Die Schallquelle 40 sendet ein akustisches Signal 41 in Richtung der Empfangseinrichtung 20. Das erste Mikrofon M1, das zweite Mikrofon M2 und das dritte Mikrofon M3 empfangen das von der Schalquelle 40 ausgesendete akustische Signal 41 zu unterschiedlichen Zeitpunkten. Diese Information wird an die mit der Empfangseinrichtung 20 verbundenen Steuervorrichtung 50 weitergeleitet. Da die Steuervorrichtung 50 ebenfalls mit der Schallquelle 40 verbunden ist, ist der Steuervorrichtung 50 sowohl der Zeitpunkt der Erzeugung des akustischen Signals 41, als auch die einzelnen Zeitpunkte des Empfangens des akustischen Signals 41 durch die Mikrofone M1, M2, M3 bekannt. Die Steuervorrichtung 50 berechnet aus den Laufzeitunterschieden der akustischen Signale 41 die Position der Schallquelle. Da diese Berechnung für jede Sendeposition der Schallquelle 40, welche den Kotflügeln 31 und/oder den Radnaben 33 des Fahrzeugs 30 zugeordnet sind, durchgeführt mit, kann die Steuervorrichtung 50 daraus den die Fahrhöhe und/oder die Fahrachse und/oder den Neigungswinkel und/oder den Rollwinkel des Fahrzeugs 30 berechnen.

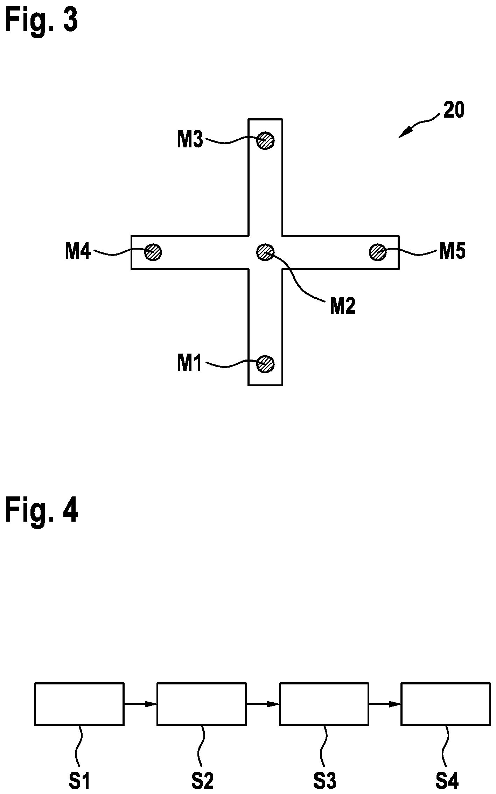

Figur 3 zeigt eine zweite Ausgestaltung der Empfangseinrichtung 20. Zusätzlich zu den vertikal zueinander angeordneten Mikrofonen M1, M2, M3 der ersten Ausgestaltung der Empfangseinrichtung 10 sind ein viertes Mikrofon M4 und ein fünftes Mikrofon M5 vorgesehen. Das zweite Mikrofon M2, das vierte Mikrofon M4 und das fünfte Mikrofon M5 sind horizontal zueinander angeordnet. Das zweite Mikrofon M2 ist vertikal von dem ersten Mikrofon M1 und dem dritten Mikrofon M3 umgeben und horizontal von dem vierten Mikrofon M4 und dem fünften Mikrofon M5 umgeben. Da der Abstand der einzelnen Mikrofonen M1, M3, M4, M5 zu dem zweiten Mikrofon M2 identisch ist, bilden die Mikrofonen M1, M2, M3, M4, M5 eine Kreuzform, in deren Mitte das zweite Mikrofon M2 angeordnet ist.

Wenn solch eine Ausgestaltung der Empfangseinrichtung 20 verwendet wird, benötigt man lediglich die Schallquellen 40 an den Kotflügeln 31 des Fahrzeugs 30. Bewegt sich das Fahrzeug 30 während der Messung um eine Strecke von 1 bis 3 Metern auf die Empfangseinrichtung 20 zu oder von der Empfangseinrichtung 20 weg, so kann basierend darauf die Fahrhöhe und/oder die Fahrachse und/oder den Neigungswinkel und/oder den Rollwinkel bestimmt werden. Eine Schallquelle 40 an den Radnaben 33 ist nicht weiter von Noten. Die Kalibrierung kann somit weiter vereinfacht werden.

Figur 4 zeigt ein Flussdiagramm für ein Verfahren zum Kalibrieren einer Erfassungseinrichtung 20 eines Fahrzeugs 30.

In einem ersten Schritt S1 wird mindestens eine Schallquelle 40 an mindestens zwei Sendepositionen an dem Fahrzeug 30 angeordnet.

In einem zweiten Schritt S2 senden die Schallquellen 40 ein akustisches Signal 41 mit einer festgelegten Wellenlänge aus.

In einem dritten Schritt S3 empfängt die Empfangseinrichtung 20, welche mindestens ein erste Mikrofon M1, eine zweites Mikrofon M2 und eine drittes Mikrofon M3 umfasst, das akustisches Signal 41.

Je nachdem wie viele Schallquellen 40 verwendet werden, werden die Schritte S1 bis S3 solange wiederholt, bis die Empfangseinrichtung 20 akustische Signale 41 von Schallquellen 40 von jedem der Sendepositionen, vier an den Kotflügeln und zwei an den Radnaben der Hinterachse, empfangen hat. Wird eine Empfangseinrichtung 20 der zweiten Ausführungsform mit fünf Mikrofonen M1 bis M5 verwendet, so werden die Schritte S1 bis S3 solange wiederholt, bis die Empfangseinrichtung 20 akustische Signale 41 von Schallquellen 40 von jedem der Sendepositionen an den vier Kotflügeln empfangen hat.

In einem vierten Schritt S4 berechnet die Steuervorrichtung 50 basierend auf den von der Empfangseinrichtung 20 empfangenen akustischen Signalen 41 die Sendepositionen der Schallquellen 40.

Aus den Sendepositionen der Schallquellen 40, berechnet die Steuervorrichtung 50 anschließend die Fahrhöhe und/oder die Fahrachse und/oder den Rollwinkel und/oder den Neigungswinkel des Fahrzeugs 30.

## Patentansprüche

1. Kalibriersystem (10) für eine Erfassungseinrichtung (20) eines Fahrzeugs (30), umfassend:
mindestens eine Schallquelle (40), eingerichtet zum Aussenden von mindestens einem akustischen Signal (41) mit einer festgelegten Wellenlänge, die an mindestens einer Sendeposition an dem Fahrzeug (30) angeordnet ist;
eine Empfangseinrichtung (20), umfassend mindestens ein erstes Mikrofon (M1), ein zweites Mikrofon (M2) und ein drittes Mikrofon (M3), eingerichtet zum Empfangen des akustischen Signals (41); und
eine Steuervorrichtung (50), eingerichtet, basierend auf dem von der Empfangseinrichtung (20) empfangenen akustischen Signal (41) die Sendeposition der Schallquelle (40) zu berechnen, wobei die Steuervorrichtung (50) mit der Schallquelle (40) und der Empfangseinrichtung (20) verbunden ist.

2. Kalibriersystem (10) nach Anspruch 1, wobei
die Schallquelle (40) an den Kotflügeln (31) von Rädern (32) des Fahrzeugs (30) und/oder an der Radnabe (33) von Rädern (32) des Fahrzeugs (30) angeordnet ist.

3. Kalibriersystem (10) nach einem Ansprüche 1 oder 2, wobei
das erste Mikrofon (M1), das zweite Mikrofon (M2) und das dritte Mikrofon (M3) vertikal zueinander angeordnet sind.

4. Kalibriersystem (10) nach einem der vorherigen Ansprüche, wobei
die Steuervorrichtung (50) eingerichtet ist, basierend auf mindestens zwei Sendepositionen der Schallquelle (40) am Fahrzeug (30) eine Fahrhöhe des Fahrzeugs (30) und/oder eine Fahrachse des Fahrzeugs (30) und/oder einen Neigungswinkel des Fahrzeugs und/oder einen Rollwinkel des Fahrzeugs (30) zu berechnen.

5. Kalibriersystem (10) nach Anspruch 4, wobei
die Empfangseinrichtung (20) ein viertes Mikrofon (M4), und ein fünftes Mikrofon (M5), aufweist, die derart angeordnet sind, dass mindestens drei Mikrofone (M2, M4, M5) horizontal zueinander angeordnet sind.

6. Kalibriersystem (10) nach Anspruch 5, wobei
die Steuervorrichtung (50) eingerichtet ist, wenn das Fahrzeug (30) während einer Messung bewegt wird, eine Fahrachse des Fahrzeugs (30) basierend auf einer Sendeposition der Schallquelle (40) am Fahrzeug (30) zu berechnen.

7. Verfahren zum Kalibrieren einer Erfassungseinrichtung (20) eines Fahrzeugs (30), umfassend die Schritte:
Anordnen von mindestens einer Schallquelle (40) an mindestens einer Sendeposition an dem Fahrzeug (30);
Aussenden eines akustischen Signals (41) mit einer festgelegten Wellenlänge durch die Schallquelle (40);
Empfangen des akustischen Signals durch eine Empfangseinrichtung (20) umfassend mindestens ein erstes Mikrofon (M1), ein zweites Mikrofon (M2) und ein drittes Mikrofon (M3); und
Berechnen der Sendeposition, der Schallquelle, basierend auf dem von der Empfangseinrichtung empfangenen akustischen Signal (41), durch eine Steuervorrichtung (50).

8. Verfahren nach einem der Ansprüche 6 oder 7, wobei
eine Fahrhöhe des Fahrzeugs (30) und/oder eine Fahrachse des Fahrzeugs (30) und/oder ein Neigungswinkel des Fahrzeugs (30) und/oder ein Rollwinkel des Fahrzeugs (30) basierend auf mindestens zwei Sendepositionen der Schallquelle (40) am Fahrzeug (30) durch die Steuervorrichtung (50) berechnet wird,
oder vorteilhaft, das akustische Signal durch eine Empfangseinrichtung (20) umfassend mindestens ein erstes Mikrofon (M1), ein zweites Mikrofon (M2), ein drittes Mikrofon (M3), ein viertes Mikrofon (M4) und ein fünftes Mikrofon (M5) empfangen wird, wobei mindestens drei Mikrofone (M2, M4, M5) horizontal zueinander angeordnet sind und wenn das Fahrzeug (30) während der Messung bewegt wird, eine Fahrachse des Fahrzeugs (30) basierend auf einer Sendeposition der Schallquelle (40) am Fahrzeug (30) durch die Steuervorrichtung (50) berechnet wird.

9. Programmelement, das, wenn es auf einer Steuervorrichtung eines Kalibrierungssystems ausgeführt wird, das Kalibrierungssystem anleitet, die folgenden Schritte durchzuführen:
Aussenden eines akustischen Signals (41) mit einer festgelegten Wellenlänge durch die Schallquelle (40);
Empfangen des akustischen Signals durch eine Empfangseinrichtung (20) umfassend mindestens ein erstes Mikrofon (M1), ein zweites Mikrofon (M2) und ein drittes Mikrofon (M3); und
Berechnen der Sendeposition, der Schallquelle, basierend auf dem von der Empfangseinrichtung empfangenen akustischen Signal (41), durch eine Steuervorrichtung (50).

10. Computerlesbares medium, auf dem ein Programmelement nach Anspruch 9 gespeichert ist.
